(19)

Europäisches
Patentamt

European
Patent Office

Office européen
des brevets

(11)  **EP 2 679 057 B1**

(12)  **EUROPEAN PATENT SPECIFICATION**

(45) Date of publication and mention
of the grant of the patent:
**26.12.2018  Bulletin 2018/52**

(51) Int Cl.:
*H04W 88/06* (2009.01)     *H04W 52/30* (2009.01)
*H04W 52/48* (2009.01)     *H04L 5/00* (2006.01)
*H04L 5/14* (2006.01)      *H04W 28/04* (2009.01)
*H04W 24/10* (2009.01)     *H04W 52/22* (2009.01)
*H04W 52/14* (2009.01)     *H04W 52/28* (2009.01)
*H04W 52/34* (2009.01)     *H04W 52/36* (2009.01)
*H04W 88/02* (2009.01)     *H04W 88/08* (2009.01)

(21) Application number: **12749277.5**

(22) Date of filing: **21.02.2012**

(86) International application number:
**PCT/KR2012/001302**

(87) International publication number:
**WO 2012/115428 (30.08.2012 Gazette 2012/35)**

(54) **TRANSMIT POWER CONTROL METHOD AND APPARATUS**

VERFAHREN UND VORRICHTUNG ZUR STEUERUNG EINER SENDELEISTUNG

PROCÉDÉ ET APPAREIL DE RÉGULATION DE LA PUISSANCE DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2011   US 201161444844 P
10.02.2012   KR 20120013941**

(43) Date of publication of application:
**01.01.2014   Bulletin 2014/01**

(73) Proprietor: **Samsung Electronics Co., Ltd.
Suwon-si, Gyeonggi-do 443-742 (KR)**

(72) Inventors:
• **KIM, Soeng Hun
Yongin-si
Gyeonggi-do 446-908 (KR)**
• **KIM, Sang Bum
Seoul 140-220 (KR)**

(74) Representative: **HGF Limited
Saviour House
9 St. Saviourgate
York YO1 8NQ (GB)**

(56) References cited:
JP-A- 2002 217 828      KR-A- 20050 119 619
US-A1- 2006 003 787      US-A1- 2008 008 152
US-A1- 2008 215 948      US-A1- 2009 034 487

• **MOTOROLA AND MCC 160: "Corrections to GCF
WI-25 test case 7.1.6.2.10", 3GPP DRAFT;
R5-070307, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG5, no. HongKong; 20070129, 29 January 2007
(2007-01-29), XP050184646, [retrieved on
2007-01-29]**

**Description**

[Technical Field]

The present invention relates to a method and apparatus for controlling a User Equipment (UE) in a mobile communication system. More particularly, the present invention relates to a method and apparatus for controlling transmit power of a UE in a mobile communication system.

[Background Art]

Mobile communication systems were initially developed to provide a subscriber with a voice communication service while the user was on the move. With advances in communication technologies, the mobile communication systems have evolved to support high speed data communication services as well as the standard voice communication services.

The Long Term Evolution (LTE) standard, which is standardized by the 3rd Generation Partnership Project (3GPP), is an example of a next generation mobile communication system. The LTE standard is designed to provide for a downlink speed of up to 100 Mbps. In order to fulfill the requirements for an LTE system, studies have been done of various aspects including minimization of the number of involved nodes in the connections and placing the radio protocol closer to the radio channels.

Unlike the standard voice service, most data services are allocated resources according to the amount of data to be transmitted and according to a channel condition. Accordingly, in a wireless communication system such as a cellular communication system, it is important to manage resource allocation based on the resource scheduled for data transmission, the channel condition, and the amount of data to be transmitted. The importance of resource allocation management is also applicable in the LTE system. As such, in the LTE system, a base station scheduler manages and assigns radio resources based on the above considerations.

More recent studies have focused on the LTE-Advanced (LTE-A) standard, which improves the data rate with the adaptation of several new techniques. In the LTE-A system, the Specific Absorption Rate (SAR) requirement for controlling the influence of microwaves to the human body below a predetermined level is applied strictly. Accordingly, the UE's transmit power is limited to meet the SAR requirement.

Furthermore, in order to prevent multiple communication modules from interfering with each other, it is also considered to reduce the UE transmit power for the LTE-A communication module. There is therefore a need of a method and apparatus for controlling a UE's transmit power efficiently in consideration of an uplink channel and a Hybrid Automatic Repeat reQuest (HARQ) process.

US2008215948 A1 discloses a method and apparatus for hybrid automatic repeat request (HARQ) transmission. If a packet has not been successfully transmitted, it is determined whether an HARQ early termination condition is met. If the HARQ early termination condition is met, the HARQ process is terminated and the packet is discarded at the HARQ level. The HARQ early termination condition is met if a positive acknowledgement (ACK) has not been received until the number of retransmissions reaches a predetermined limit that is dynamically configured based on channel condition, measurement, etc. Alternatively, the HARQ early termination condition is met if a transmit power required for successful transmission of the packet is much higher than an actual transmit power.; Alternatively, the HARQ early termination condition is met if a transport format combination (TFC) selected for retransmission is different from an optimal TFC. A higher layer may be notified of the early HARQ termination.

US2008008152 A1 discloses a method and apparatus for reconfiguring a MAC entity of a MAC layer of the apparatus receiving protocol data units from a mobile terminal via on uplink upon reconfiguration of the uplink channel. Further, the invention relates to methods and mobile terminals for triggering the transmission of a status report from an RLC entity configured for an uplink channel of a network element in a radio access network, as well as a method and terminal for configuring the MAC layer of the mobile terminal. In order to enable an efficient and fast generation of RLC status reports after an uplink channel reconfiguration the invention suggests mechanisms to trigger the transmission of status reports upon uplink reconfiguration as well a operation and configuration of radio access network elements and UEs upon uplink channel reconfiguration, in particular a transmission time interval (TTI) reconfiguration.

[Disclosure of Invention]

[Technical Problem]

Aspects of the present invention are to address at least the above-mentioned problems and/or disadvantages and to provide at least the advantages described below. Accordingly, an aspect of the present invention is to provide a method and apparatus for controlling a User Equipment (UE) transmit power efficiently in a transmit power reduction mode.

[Solution to Problem]

In accordance with an aspect of the present invention, a transmit power control method of a terminal is provided according to claim 1. The method includes determining, when the terminal's required transmit power exceeds the terminal's maximum transmit power, whether a plurality of Hybrid Automatic Repeat reQuest (HARQ) processes are running, and reducing, when the plurality of HARQ processes are running, a transmit power of at least one of the plurality of HARQ processes which has not experienced transmit power reduction previously.

In accordance with another aspect of the present invention, a terminal for controlling transmit power is provided according to claim 8. The terminal includes a controller for determining, when the terminal's required transmit power exceeds the terminal's maximum transmit power, whether a plurality of HARQ processes are running and reduces, when the plurality of HARQ processes are running, a transmit power of at least one of the plurality of HARQ processes which has not experienced transmit power reduction previously.

[Advantageous Effects of Invention]

Other aspects, advantages, and salient features of the invention will become apparent to those skilled in the art from the following detailed description, which, taken in conjunction with the annexed drawings, discloses exemplary embodiments of the invention.

[Brief Description of Drawings]

The above and other aspects, features, and advantages of certain exemplary embodiments of the present invention will be more apparent from the following description taken in conjunction with the accompanying drawings, in which:

FIG. 1 is a diagram illustrating a configuration of transmit power of a User Equipment (UE) according to an exemplary embodiment of the present invention;
FIG. 2 is a perspective view illustrating a device equipped with multiple communication modules according to an exemplary embodiment of the present invention;
FIG. 3 is a diagram illustrating a principle of an uplink Hybrid Automatic Repeat reQuest (HARQ) process in a Long Term Evolution (LTE) system according to an exemplary embodiment of the present invention;
FIG. 4 is a flowchart illustrating an uplink transmit power control method according to an exemplary embodiment of the present invention;
FIG. 5 is a flowchart illustrating a HARQ process with transmit power reduction according to an exemplary embodiment of the present invention;
FIG. 6 is a flowchart illustrating a HARQ process according to an exemplary embodiment of the present invention; and
FIG. 7 is a block diagram illustrating a configuration of a UE according to an exemplary embodiment of the present invention.

Throughout the drawings, it should be noted that like reference numbers are used to depict the same or similar elements, features, and structures.

[Mode for the Invention]

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention as defined by the claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a method and apparatus for controlling a User Equipment's (UE's) transmit power efficiently.

The UE's transmit power can be affected by several external factors. The Specific Absorption Rate (SAR) requirement and inter-communication module requirement are representative examples. The SAR requirement reduces the UE's transmit power to reduce the influence of electromagnetic waves from the UE to the human body below a predetermined level. Typically, mobile devices are equipped with multiple communication modules including Wireless Local Area Network (WLAN), Bluetooth, and Long Term Evolution (LTE) modules. In order to mitigate interference among these built-in communication modules, research has been conducted under the In-Device Coexistence (IDC) concept in the LTE standard. For example, by reducing the LTE transmission signal power in Bluetooth reception mode, it is possible to reduce the amount of interference of an LTE transmission signal to the Bluetooth communication. In order to determine how the SAR requirement reduces the maximum transmit power, it is useful to examine the process for determining a UE's maximum transmit power.

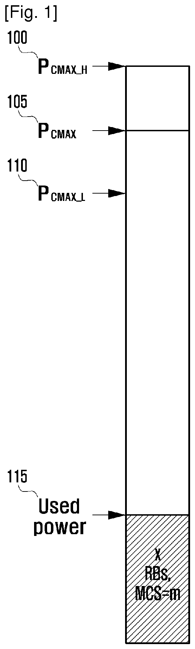

FIG. 1 is a diagram illustrating a configuration of transmit power of a UE according to an exemplary embodiment of the present invention.

Referring to FIG. 1, the maximum UE transmit power $P_{CMAX}$ 105 is set to a value between the $P_{CMAX\_H}$ and $P_{CMAX\_L}$ based on the parameters provided by the evolved Node B (eNB) and predefined parameters of Equations (1) - (3):

$$P_{CMAX\_L} \leq P_{CMAX} \leq P_{CMAX\_H} \qquad \ldots (1)$$

where the upper bound $P_{CMAX\_H}$ 100 and the lower bound $P_{CMAX\_L}$ 110 are defined as follows:

$$P_{CMAX\_L}=MIN\{P_{EMAX}-TC, P_{PowerClass}-MAX(MPR+A\text{-}MPR, P\text{-}MPR)-TC\} \ldots (2),$$

$$P_{CMAX\_H}=MIN\{P_{EMAX}, P_{PowerClass}\} \qquad \ldots (3)$$

where $P_{EMAX}$ is a maximum allowed UE transmit power which is transmitted from the eNB to the UE in System Information Block 1 (SIB1) as broadcast information. $P_{PowerClass}$ is a nominal UE power. $P_{CMAX\_H}$ is defined as the minimum between $P_{EMAX}$ and $P_{PowerClass}$. Meanwhile, $P_{CMAX\_L}$ is somewhat complex. $P_{CMAX\_L}$ is influenced by Maximum Power Reduction (MPR)+Additional-MPR (A-MPR) and P-MPR. $\Delta T_C$, MPR, and A-MPR are parameters for defining the ceiling value to adjust the maximum UE transmit power in the serving cell such that the unintended radiation or interference to an adjacent channel meet a predetermined requirement.

MPR is the value determined according to the amount of transmission resources allocated to the UE and the modulation scheme. A-MPR is the value determined according to an uplink frequency band, geographical characteristics, and an uplink transmission bandwidth. A-MPR is used for the case in which a frequency band is particularly sensitive to ambient spurious radiation. $\Delta T_C$ is the parameter for allowing additional transmit power adjustment in a case where uplink transmission is performed at an edge of the frequency band. If uplink transmission is performed on the lowest 4MHz or the highest 4MHz of a certain frequency band, the UE sets $\Delta T_C$ to 1.5 dB and, otherwise, sets $\Delta T_C$ to 0. P-MPR is a maximum power reduction value applied for satisfying the SAR requirement and determined in consideration of the distance between the device and the body of the user. For example, if the distance between the device and user's body is short, the total transmit power value of the UE should be reduced and, for this, a high value of P-MPR is applied. In contrast, if the distance between the device and the user's body is long, it is tolerable to increase the total transmit power value of the device such that P-MPR is set to a low value. The used transmit power 115 is determined for a Resource Block (RB) and a Modulation and Coding Scheme (MCS) allocated for the corresponding UE and can exceed the maximum UE transmit power $P_{CMAX}$ 105.

In IDC, which is still under development, it is expected to reduce the transmit power in a similar manner to the reduction of the maximum UE transmit power with P-MPR according to the SAR requirement.

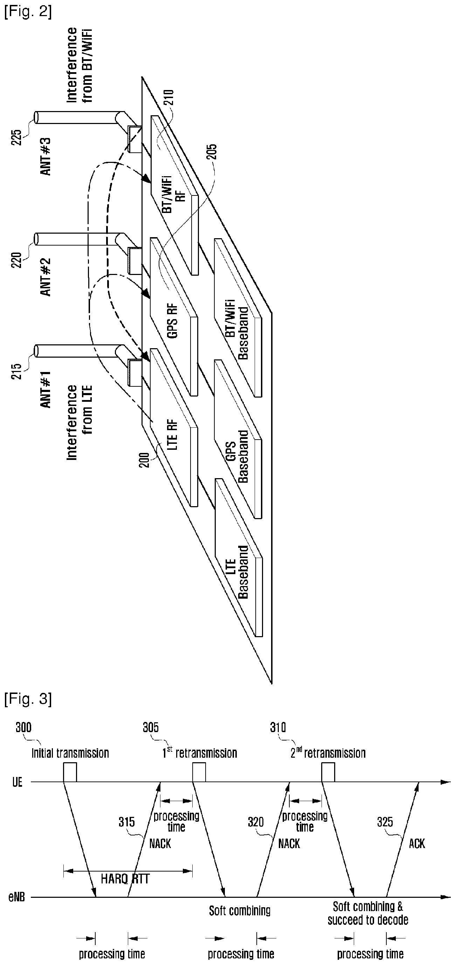

FIG. 2 is a perspective view illustrating a device equipped with multiple communication modules according to an exemplary embodiment of the present invention.

Referring to FIG. 2, recent mobile devices are equipped with multiple communication modules for supporting diversified functions. The communication modules can include an LTE module 200, a Global Positioning System (GPS) module 205, and a short range wireless communication module 210 such as Bluetooth and Wide Local Area Network (WLAN). These communication modules transmit/receive data through corresponding antennas 215, 220 and 225. Although the communication systems operate on different frequency bands, the communication modules of the systems operating on the contiguous frequency bands are likely to interfere with each other. This is because it is impossible to entirely separate the signals transmitted/received on the frequency bands. Also, since the communication modules and antennas are placed in the space-restricted mobile device, they are arranged in close proximity. As a consequence, interference among the communication modules cannot be ignored. In order to mitigate such in-device interference, is it necessary to control the transmit powers of the communication modules. For example, the transmission signal of the LTE communication module 200 can cause interference with data reception of the short range communication module 210 such as a Bluetooth/WiFi module. In order to mitigate the interference, the maximum transmit power of the LTE communication module may be reduced.

In order to meet the SAR requirement or the IDC requirement, control of the transmit power is a key issue of an LTE UE. Since the UE can control the power allocation for data and control signals on the Physical Uplink Shared CHannel (PUSCH) and the Physical Uplink Control CHannel (PUCCH) respectively, especially in consideration of HARQ processes, a method is needed for controlling the UE transmit power efficiently in consideration of these complex factors.

The PUSCH and the PUCCH are data transmission and control signaling channels, respectively. Accordingly, a transmission error on the PUCCH can cause significant problems. Accordingly, when the UE faces a situation requiring transmit power reduction, it is preferred to reduce the power allocated to the PUSCH first. However, if such a situation takes place while only the PUCCH is used, it may be necessary to reduce the transmit power of the PUCCH. Even when reducing the transmit power of the PUSCH, it may decrease performance degradation to reduce the transmit power per HARQ process.

The HARQ process adopted for the LTE standard is a Stop-And-Wait (SAW) protocol in which a subsequent transmission can take place only after receiving ACKnowledge/Non-ACKnowledge (ACK/NACK) for the previous data transmission. This causes a waste of radio resources for Round Trip Time (RTT). In order to reduce any waste of radio resources and improve resource efficiency, multiple HARQ processes may operate. The LTE standard supports up to 8 HARQ processes that are identified by a 3-bit HARQ process ID.

FIG. 3 is a diagram illustrating a principle of an uplink HARQ process in an LTE system according to an exemplary embodiment of the present invention.

Referring to FIG. 3, the UE attempts initial transmission 300 of a Media Access Control Protocol Data Unit (MAC PDU). If the packet is received, the eNB consumes a certain amount of processing time to determine whether the packet is decoded successfully. If the decoding fails, the eNB transmits NACK 315 to the UE. If the NACK 315 is received, the UE attempts retransmission 305. Typically, the time between the previous packet transmission and next retransmission is defined as HARQ RTT. In FIG. 3, it is shown that the uplink radio resource is wasted. In order to reduce the waste of radio resources, another HARQ process is activated for the HARQ RTT. If the retransmitted packet 305 is received, the eNB performs soft combining of the retransmitted packet 305 with the previously received packet. That is, by accumulating the previously received packet energy and the currently received packet energy, it is possible to increase the probability of a successful decoding process. If decoding fails again, the eNB transmits NACK 320 to the UE. Upon receipt of the NACK 320, the UE attempts second retransmission 310. The eNB performs soft combining and, if decoding is successful, transmits ACK 325 to the UE.

The HARQ process operates with soft-combining such that the energy accumulates for every retransmission. In case that the transmit power is reduced for transmission of the PUSCH, it is likely that multiple HARQ processes are running in the UE. Accordingly, the packet decoding performance degradation can be alleviated by decreasing the transmit power with power distribution to several HARQ processes rather than decreasing power for every retransmission.

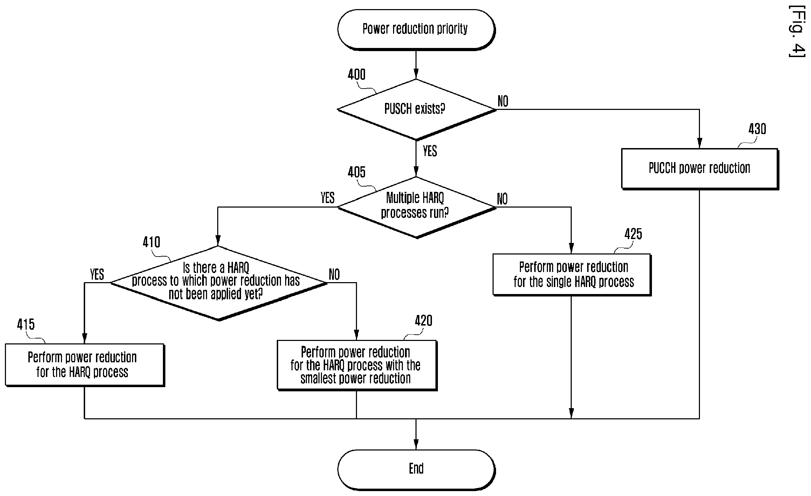

FIG. 4 is a flowchart illustrating an uplink transmit power control method according to an exemplary embodiment of the present invention.

Referring to FIG. 4, if it is required to reduce UE transmit power, the UE determines whether PUSCH is in use at step 400. If no PUSCH is in use, the UE reduces the transmit power of PUCCH to a certain level to meet the requirement in step 430. Otherwise, if PUSCH is in use, the UE attempts transmit power reduction on PUSCH. More specifically, the UE determines whether multiple HARQ processes are running on PUSCH at step 405. If it is determined that only one HARQ process is running, the UE performs transmit power reduction in the corresponding HARQ process at step 425. On the other hand, if the data are transmitted on multiple HARQ processes simultaneously in carrier aggregation mode, the UE determines whether there is a HARQ process to which the transmit power reduction has never been applied at step 410. For reference, whether the transmit power reduction has been applied in a certain process is a proposition restricted to MAC PDU transmission. That is, if no transmit power reduction is applied in a certain process for a certain MAC PDU, the UE determines that the transmit power reduction has not been applied in the corresponding process. If there is a HARQ process to which the transmit power reduction has never been applied, the UE reduces the transmit power in the corresponding HARQ process first at step 415. That is, the UE reduces the transmit power of PUSCH carrying the MAC PDU in the corresponding process first. Otherwise, if there is no HARQ process to which the transmit power reduction has never been applied, the UE reduces the transmit power in the process having the least accumulated power reduction amount for the MAC PDUs being transmitted at the corresponding time point first at step 420. To sum up, the UE performs power reduction according to the following order in multiple LTE uplink transmission:

- Reduce the transmit power of the PUSCH in the HARQ process to which no transmit power reduction has been applied yet.
- Reduce the transmit power of the PUSCH in the HARQ having the least power reduction amount.
- PUCCH power reduction

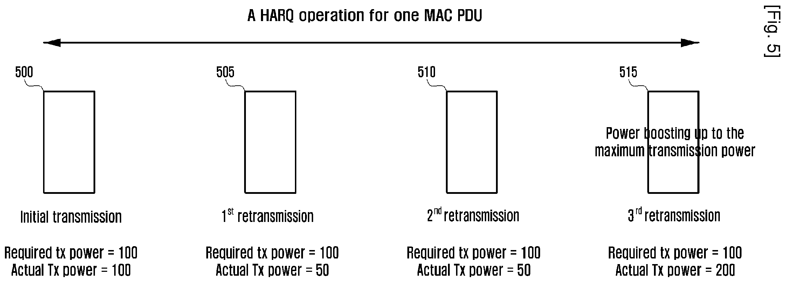

FIG. 5 is a flowchart illustrating a HARQ process with transmit power reduction according to an exemplary embodiment of the present invention.

Referring to FIG. 5, if the required UE power is 100 in initial transmission 500, the data are transmitted with the actual transmit power of 100 without transmit power reduction. However, if the eNB fails decoding, the UE performs a first retransmission 505. The first retransmission 505 is attempted with the reduced transmit power 50. The UE records the reduced power of 50. If the eNB fails decoding again, the UE performs the second retransmission 510. At this time, the transmit power is 50 with the power reduction. The UE records the accumulated power reduction of 100 obtained by summing the power reductions of the first and second retransmissions. If the second retransmission fails, the UE performs a third retransmission 515. At this time, if the transmit power reduction is released, the UE performs the third retransmission at the transmit power of 200 obtained by summing the total power reduction amount 100 and the required transmit power 100. However, if the sum of the total power reduction amount and required power is greater than the maximum transmit power, the UE sets the UE transmit power to match with the maximum transmit power and transmits the data at the UE transmit power.

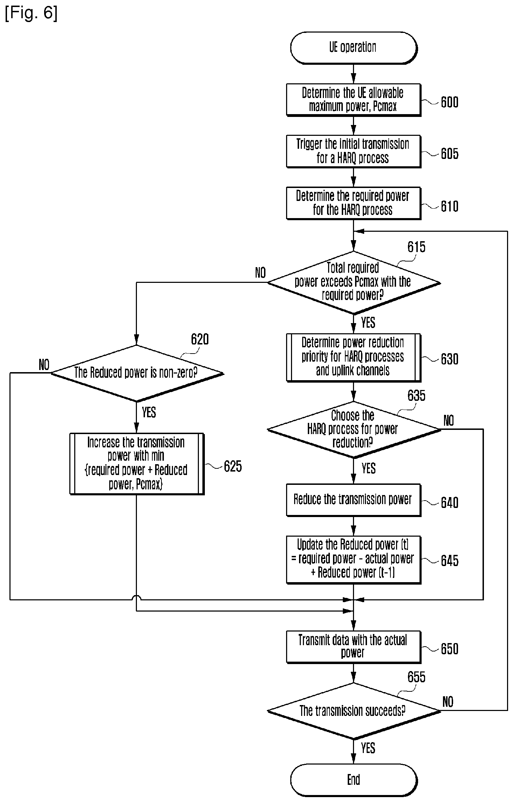

FIG. 6 is a flowchart illustrating a HARQ process according to an exemplary embodiment of the present invention.

Referring to FIG. 6, the UE determines maximum UE transmit power $P_{CMAX}$ in consideration of the SAR requirement and/or IDC requirement at step 600. The UE cannot use more power than the maximum UE transmit power. The UE starts initial transmission in a certain HARQ process at step 605. The UE determines the required power for the HARQ process at step 610. The UE determines if the total required transmit power including the transmit power allocated for the corresponding HARQ process exceeds the maximum UE transmit power $P_{CMAX}$ at step 615. If the total required transmit power does not exceed $P_{CMAX}$, the UE determines whether there is any reduced power according to the power reduction in the corresponding HARQ process at step 620. Since there is no power reduction in the initial transmission, the data transmission is performed with the required transmit power in the initial transmission. In case of retransmission, there can be the reduced power according to the power reduction in the previous transmissions. In this case the UE sets the UE transmit power to the sum of the recoded total reduction power and the required transmit power at step 625 and transmits the data at the UE transmit power at step 650. If the sum of the total reduction power and the required transmit power exceeds $P_{CMAX}$, the UE sets the UE transmit power to $P_{CMAX}$. If the total required transmit power exceeds $P_{CMAX}$ at step 615, the UE determines the channel and HARQ process to which the power reduction is applied at step 630. An exemplary method to determine the channel and HARQ process to which the power reduction is applied has been described above with reference to FIG. 4. If a HARQ process is selected for the transmit power reduction at step 635, the UE reduces the transmit power as much as necessary at step 640. The UE records the reduced power amount in an accumulative manner at step 645. The UE transmits data at the determined transmit power at step 650. Afterward, the UE determines whether the transmission is successful at step 655 and, if eNB fails decoding, the UE performs the retransmission process from step 615.

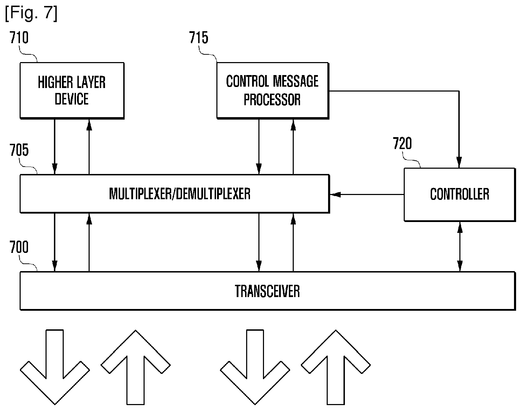

FIG. 7 is a block diagram illustrating a configuration of a UE according to an exemplary embodiment of the present invention.

Referring to FIG. 7, the UE includes a transceiver 700, a multiplexer/demultiplexer 705, a higher layer device 710, a control message processor 715, and a controller 720.

The UE transmits/receives data generated by the higher layer device 710 and control messages generated by the control message processor 715. When transmitting a control signal and/or data to the eNB, the UE multiplexes the control signal and/or data by means of the multiplexer/demultiplexer 705 under the control of the controller 720. The controller 720 can control transmit power according to the above-described exemplary embodiments. In contrast, when receiving a control signal and/or data, the UE receives the control signal and/or data by means of the transceiver 700, demultiplexes the received signal by means of the multiplexer/demultiplexer 705, and sends the demultiplexed signal to the higher layer device 710 or the control message processor 715.

As described above, the UE transmit power control method and apparatus of exemplary embodiments of the present invention is advantageous to control the transmit power in transmit power reduction mode.

[Industrial Applicability]

While the invention has been shown and described with reference to certain exemplary embodiments thereof, it will be understood by those skilled in the art that various changes in form and details may be made therein without departing from the scope of the invention as defined by the appended claims.

**Claims**

1. A transmit power control method of a terminal, the method comprising:

   determining, (405, 615), if the terminal's required transmit power exceeds the terminal's maximum transmit power, whether a plurality of Hybrid Automatic Repeat reQuest, HARQ processes are running on the Physical Uplink Shared Channel, PUSCH ;
   identifying, (410, 630), if the plurality of HARQ processes are running, at least one of the plurality of HARQ processes which has not experienced transmit power reduction for Media Access Control Protocol Data Unit MAC PDU transmission previously; and
   reducing, (415, 635, 640), a transmit power of the at least one of the plurality of HARQ processes which has not experienced transmit power reduction previously.

2. The method of claim 1, further comprising reducing, (420), if each of the plurality of HARQ processes has previously experienced a transmit power reduction, the transmit power of one of the plurality of HARQ processes that has experienced the fewest number of previous power reductions.

3. The method of claim 2, further comprising increasing, (625), if the terminal's required transmit power does not exceed the terminal's maximum transmit power, the transmit power of the one of the plurality of HARQ processes that has experienced the fewest number of previous power reductions.

4. The method of claim 3, further comprising accumulating an amount of the transmit power reduction of each of the plurality of HARQ processes that has previously experienced the transmit power reduction,
   wherein the increasing comprises incrementing the transmit power of the one of the plurality of HARQ processes that has experienced the fewest number of previous power reductions based on the amount of the accumulated power reduction in the corresponding HARQ process.

5. The method of claim 3, further comprising accumulating an amount of the transmit power reduction of each of the plurality of HARQ processes that has previously experienced the transmit power reduction,
   wherein the increasing comprises incrementing the transmit power of the one of the plurality of HARQ processes that has experienced the fewest number of previous power reductions as much as a sum of the amount of the accumulated power reduction and a required power of the corresponding process.

6. The method of claim 1, further comprising reducing, if the terminal's required transmit power is greater than the terminal's maximum transmit power and a single HARQ process is running, the transmit power of the single HARQ process.

7. The method of claim 1, further comprising reducing, if the terminal's required transmit power is greater than the terminal's maximum transmit power and no uplink data channel to be transmitted exists, the transmit power of an uplink control channel.

8. A terminal for controlling transmit power, the terminal comprising:
   a controller, (720), configured to determine, if the terminal's required transmit power exceeds the terminal's maximum transmit power, whether a plurality of Hybrid Automatic Repeat reQuest HARQ processes are running on the Physical Uplink Shared Channel PUSCH ; to identify, if the plurality of HARQ processes are running, at least one of the plurality of HARQ processes which has not experienced transmit power reduction for Media Access Control Protocol Data Unit MAC PDU transmission previously, and to reduce a transmit power of the at least one of the plurality of HARQ processes which has not experienced transmit power reduction previously.

9. The terminal of claim 8, wherein the controller is configured to reduce, if each of the plurality of HARQ processes has previously experienced a transmit power reduction, the transmit power of one of the plurality of HARQ process that has experienced the fewest number of previous power reductions.

10. The terminal of claim 9, wherein the controller is configured to increase, if the terminal's required transmit power does not exceed the terminal's maximum transmit power, the transmit power of the one of the plurality of HARQ processes that has experienced the fewest number of previous power reductions.

11. The terminal of claim 10, wherein the controller is configured to accumulate an amount of the transmit power reduction of each of the plurality of HARQ processes that had previously experienced the transmit power reduction and increase the transmit power of the one of the plurality of HARQ processes that has experienced the fewest number of previous power reductions based on the amount of the accumulated power reduction in the corresponding HARQ process.

12. The terminal of claim 10, wherein the controller is configured to accumulate an amount of the transmit power reduction of each of the plurality of HARQ processes that had previously experienced the transmit power reduction and increase the transmit power of the one of the plurality of HARQ processes that has experienced the fewest number of previous power reductions as much as sum of the amount of the accumulated power reduction and a required power of the corresponding process.

13. The terminal of claim 8, wherein the controller is configured to reduce, if the terminal's required transmit power is greater than the terminal's maximum transmit power and a single HARQ process is running, the transmit power of the single HARQ process.

14. The terminal of claim 8, wherein the controller is configured to reduce, if the terminal's required transmit power is greater than the terminal's maximum transmit power and no uplink data channel to be transmitted exists, the transmit power of an uplink control channel.

**Patentansprüche**

1. Sendeleistungssteuerungsverfahren für einen Terminal, wobei das Verfahren folgendes umfasst:

   Bestimmen (405, 615), wenn die benötigte Sendeleistung des Terminals die maximale Sendeleistung des Terminals übersteigt, ob eine Mehrzahl von Hybrid Automatic Repeat Request (HARQ)-Prozessen auf dem Physical Uplink Shared Channel (PUSCH) ausgeführt wird;
   Identifizieren (410, 630), wenn die Mehrzahl von HARQ-Prozessen ausgeführt wird, wenigstens eines Prozesses der Mehrzahl von HARQ-Prozessen, bei dem zuvor keine Sendeleistungsreduzierung für eine Media Access Control Protocol Data Unit (MAC PDU)-Übermittlung aufgetreten ist; und
   Reduzieren (415, 635, 640) einer Sendeleistung des wenigstens einen Prozesses der Mehrzahl von HARQ-Prozessen, bei dem zuvor keine Sendeleistungsreduzierung aufgetreten ist.

2. Verfahren nach Anspruch 1, ferner umfassend das Reduzieren (420), wenn bei jedem der Mehrzahl von HARQ-Prozessen zuvor eine Sendeleistungsreduzierung aufgetreten ist, der Sendeleistung eines Prozesses der Mehrzahl von HARQ-Prozessen, bei dem die geringste Anzahl vorheriger Leistungsreduzierungen aufgetreten ist.

3. Verfahren nach Anspruch 2, ferner umfassend das Erhöhen (625), wenn die benötigte Sendeleistung des Terminals die maximale Sendeleistung des Terminals nicht übersteigt, der Sendeleistung des einen Prozesses der Mehrzahl von HARQ-Prozessen, bei dem die geringste Anzahl vorheriger Leistungsreduzierungen aufgetreten ist.

4. Verfahren nach Anspruch 3, ferner umfassend das Akkumulieren einer Höhe der Sendeleistungsreduzierung jedes Prozesses der Mehrzahl von HARQ-Prozessen, bei dem zuvor die Sendeleistungsreduzierung aufgetreten ist; wobei das Erhöhen das Inkrementieren der Sendeleistung des einen Prozesses der Mehrzahl von HARQ-Prozessen, bei dem die geringste Anzahl vorheriger Leistungsreduzierungen aufgetreten ist, auf der Basis der Höhe der akkumulierten Leistungsreduzierung in dem entsprechenden HARQ-Prozess umfasst.

5. Verfahren nach Anspruch 3, ferner umfassend das Akkumulieren einer Höhe der Sendeleistungsreduzierung jedes Prozesses der Mehrzahl von HARQ-Prozessen, bei dem zuvor die Sendeleistungsreduzierung aufgetreten ist; wobei das Erhöhen das Inkrementieren der Sendeleistung des einen Prozesses der Mehrzahl von HARQ-Prozessen, bei dem die geringste Anzahl vorheriger Leistungsreduzierungen aufgetreten ist, bis zu einer Summe der Höhe der akkumulierten Leistungsreduzierung und einer benötigten Leistung des entsprechenden Prozesses umfasst.

6. Verfahren nach Anspruch 1, ferner umfassend das Reduzieren, wenn die benötigte Sendeleistung des Terminals die maximale Sendeleistung des Terminals übersteigt, und ein einzelner HARQ-Prozess ausgeführt wird, der Sendeleistung des einzelnen HARQ-Prozesses.

7. Verfahren nach Anspruch 1, ferner umfassend das Reduzieren, wenn die benötigte Sendeleistung des Terminals die maximale Sendeleistung des Terminals übersteigt, und kein zu übermittelnder Uplink-Datenkanal existiert, der Sendeleistung eines Uplink-Steuerkanals.

8. Terminal zum Steuern der Sendeleistung, wobei der Terminal folgendes umfasst:

einen Controller (720), der so gestaltet ist, dass er: bestimmt, wenn die benötigte Sendeleistung des Terminals die maximale Sendeleistung des Terminals übersteigt, ob eine Mehrzahl von Hybrid Automatic Repeat Request (HARQ)-Prozessen auf dem Physical Uplink Shared Channel (PUSCH) ausgeführt wird; wenn die Mehrzahl von HARQ-Prozessen ausgeführt wird, wenigstens einen der Mehrzahl von HARQ-Prozessen identifiziert, bei dem zuvor keine Sendeleistungsreduzierung für eine Media Access Control Protocol Data Unit (MAC PDU)-Übermittlung aufgetreten ist; und eine Sendeleistung des wenigstens einen Prozesses der Mehrzahl von HARQ-Prozessen reduziert, bei dem zuvor keine Sendeleistungsreduzierung aufgetreten ist.

9. Terminal nach Anspruch 8, wobei der Controller so gestaltet ist, dass er, wenn bei jedem der Mehrzahl von HARQ-Prozessen zuvor eine Sendeleistungsreduzierung aufgetreten ist, die Sendeleistung eines Prozesses der Mehrzahl von HARQ-Prozessen reduziert, bei dem die geringste Anzahl vorheriger Leistungsreduzierungen aufgetreten ist.

10. Terminal nach Anspruch 9, wobei der Controller so gestaltet ist, dass er, wenn die benötigte Sendeleistung des Terminals die maximale Sendeleistung des Terminals nicht übersteigt, die Sendeleistung des einen Prozesses der Mehrzahl von HARQ-Prozessen, bei dem die geringste Anzahl vorheriger Leistungsreduzierungen aufgetreten ist, erhöht.

11. Terminal nach Anspruch 10, wobei der Controller so gestaltet ist, dass er eine Höhe der Sendeleistungsreduzierung jedes Prozesses der Mehrzahl von HARQ-Prozessen akkumuliert, bei dem zuvor die Sendeleistungsreduzierung aufgetreten ist und die Sendeleistung des einen Prozesses der Mehrzahl von HARQ-Prozessen erhöht, bei dem die geringste Anzahl vorheriger Leistungsreduzierungen aufgetreten ist, auf der Basis der Höhe der akkumulierten Leistungsreduzierung in dem entsprechenden HARQ-Prozess.

12. Terminal nach Anspruch 10, wobei der Controller so gestaltet ist, dass er eine Höhe der Sendeleistungsreduzierung jedes Prozesses der Mehrzahl von HARQ-Prozessen akkumuliert, bei dem zuvor die Sendeleistungsreduzierung aufgetreten ist und die Sendeleistung des einen Prozesses der Mehrzahl von HARQ-Prozessen erhöht, bei dem die geringste Anzahl vorheriger Leistungsreduzierungen aufgetreten ist, bis zu einer Summe der Höhe der akkumulierten Leistungsreduzierung und einer benötigten Leistung des entsprechenden Prozesses.

13. Terminal nach Anspruch 8, wobei der Controller so gestaltet ist, dass er, wenn die benötigte Sendeleistung des Terminals die maximale Sendeleistung des Terminals übersteigt, und ein einzelner HARQ-Prozess ausgeführt wird, die Sendeleistung des einzelnen HARQ-Prozesses reduziert.

14. Terminal nach Anspruch 8, wobei der Controller so gestaltet ist, dass er, wenn die benötigte Sendeleistung des Terminals die maximale Sendeleistung des Terminals übersteigt, und kein zu übermittelnder Uplink-Datenkanal existiert, der Sendeleistung eines Uplink-Steuerkanals reduziert.

## Revendications

1. Procédé de régulation de la puissance de transmission d'un terminal, le procédé comprenant les étapes consistant à :

déterminer (405, 615) si la puissance de transmission requise du terminal dépasse la puissance de transmission maximale du terminal, si une pluralité de processus de requête automatique de répétition hybride (HARQ, Hybrid Automatic Repeat reQuest) sont exécutés sur le canal partagé en liaison montante physique (PUSCH, Physical Uplink Shared Channel) ; identifier (410, 630) si la pluralité de processus HARQ sont exécutés, au moins l'un de la pluralité de processus HARQ qui n'a pas connu de réduction de puissance de transmission pour la transmission de l'unité de données du protocole à contrôle d'accès au support (MAC PDU, Media Access Control Protocol Data Unit) précédemment ; et réduire (415, 635, 640) une puissance de transmission d'au moins l'un de la pluralité de processus HARQ qui n'a pas connu de réduction de puissance de transmission précédemment.

**2.** Procédé selon la revendication 1, comprenant en outre l'étape consistant à réduire (420), si chacun de la pluralité de processus HARQ a déjà connu une réduction de puissance de transmission, la puissance de transmission de l'un de la pluralité de processus HARQ qui a connu le plus petit nombre de réductions de puissance précédentes.

**3.** Procédé selon la revendication 2, comprenant en outre l'étape consistant à augmenter (625), si la puissance de transmission requise du terminal ne dépasse pas la puissance de transmission maximale du terminal, la puissance de transmission de l'un de la pluralité de processus HARQ qui a connu le plus petit nombre de réductions de puissance précédentes.

**4.** Procédé selon la revendication 3, comprenant en outre l'étape consistant à accumuler une quantité de la réduction de puissance de transmission de chacun de la pluralité de processus HARQ qui a précédemment connu la réduction de puissance de transmission,
l'augmentation comprenant l'étape consistant à augmenter la puissance de transmission de l'un de la pluralité de processus HARQ qui a connu le plus petit nombre de réductions de puissance précédentes sur la base de la quantité de la réduction de puissance accumulée dans le processus HARQ correspondant.

**5.** Procédé selon la revendication 3, comprenant en outre l'étape consistant à accumuler une quantité de la réduction de puissance de transmission de chacun de la pluralité de processus HARQ qui a précédemment connu la réduction de puissance de transmission,
l'augmentation comprenant l'étape consistant à augmenter la puissance de transmission de l'un de la pluralité de processus HARQ qui a connu le plus petit nombre de réductions de puissance précédentes jusqu'à la somme de la quantité de la réduction de puissance accumulée et d'une puissance requise du processus correspondant.

**6.** Procédé selon la revendication 1, comprenant en outre l'étape consistant à réduire, si la puissance de transmission requise du terminal est supérieure à la puissance de transmission maximale du terminal et qu'un seul processus HARQ est exécuté, la puissance de transmission du processus HARQ unique.

**7.** Procédé selon la revendication 1, comprenant en outre l'étape consistant à réduire, si la puissance de transmission requise du terminal est supérieure à la puissance de transmission maximale du terminal et s'il n'existe aucun canal de données de liaison montante à transmettre, la puissance de transmission d'un canal de régulation de liaison montante.

**8.** Terminal pour réguler la puissance de transmission, le terminal comprenant :
un dispositif de régulation (720) conçu pour déterminer, si la puissance de transmission requise du terminal dépasse la puissance de transmission maximale du terminal, si une pluralité de processus de requête automatique de répétition hybride (HARQ, Hybrid Automatic Repeat reQuest) sont exécutés sur le canal partagé en liaison montante physique (PUSCH, Physical Uplink Shared Channel) ; pour identifier, si la pluralité de processus HARQ sont exécutés, au moins l'un de la pluralité de processus HARQ qui n'a pas connu de réduction de la puissance de transmission pour la transmission de l'unité de données du protocole à contrôle d'accès au support (MAC PDU, Media Access Control Protocol Data Unit) précédemment, et pour réduire une puissance de transmission d'au moins l'un de la pluralité de processus HARQ qui n'a pas connu de réduction de puissance de transmission précédemment.

**9.** Terminal selon la revendication 8, le dispositif de régulation étant conçu pour réduire, si chacun de la pluralité de processus HARQ a déjà connu une réduction de puissance de transmission, la puissance de transmission de l'un de la pluralité de processus HARQ qui a connu le plus petit nombre de réductions de puissance précédentes.

**10.** Terminal selon la revendication 9, le dispositif de régulation étant conçu pour augmenter, si la puissance de transmission requise du terminal ne dépasse pas la puissance de transmission maximale du terminal, la puissance de transmission de l'un de la pluralité de processus HARQ qui a connu le plus petit nombre de réductions de puissance précédentes.

**11.** Terminal selon la revendication 10, le dispositif de régulation étant conçu pour accumuler une quantité de la réduction de puissance de transmission de chacun de la pluralité de processus HARQ qui avait précédemment connu la réduction de puissance de transmission et augmenter la puissance de transmission de l'un de la pluralité de processus HARQ qui a connu le plus petit nombre de réductions de puissance antérieures en fonction de la quantité de la réduction de puissance accumulée dans le processus HARQ correspondant.

**12.** Terminal selon la revendication 10, le dispositif de régulation étant conçu pour accumuler une quantité de la réduction de puissance de transmission de chacun de la pluralité de processus HARQ qui avait précédemment connu la réduction de puissance de transmission et augmenter la puissance de transmission de l'un de la pluralité de processus HARQ qui a connu le plus petit nombre de réductions de puissance antérieures jusqu'à la somme du montant de la réduction de puissance accumulée et une puissance requise du processus correspondant.

13. Terminal selon la revendication 8, le dispositif de régulation étant conçu pour réduire, si la puissance de transmission requise du terminal est supérieure à la puissance de transmission maximale du terminal et qu'un seul processus HARQ est exécuté, la puissance de transmission du processus HARQ unique.

14. Terminal selon la revendication 8, le dispositif de régulation étant conçu pour réduire, si la puissance de transmission requise du terminal est supérieure à la puissance de transmission maximale du terminal et s'il n'existe aucun canal de données de liaison montante à transmettre, la puissance de transmission d'un canal de régulation de liaison montante.

[Fig. 1]

100 $P_{CMAX\_H}$ →

105 $P_{CMAX}$ →

110 $P_{CMAX\_L}$ →

115 Used power →

x RBs, MCS=m

[Fig. 2]

[Fig. 3]

[Fig. 4]

EP 2 679 057 B1

[Fig. 5]

A HARQ operation for one MAC PDU

500 — Initial transmission
Required tx power = 100
Actual Tx power = 100

505 — 1st retransmission
Required tx power = 100
Actual Tx power = 50

510 — 2nd retransmission
Required tx power = 100
Actual Tx power = 50

515 — Power boosting up to the maximum transmission power
3rd retransmission
Required tx power = 100
Actual Tx power = 200

[Fig. 6]

```
                                      ┌─────────────────┐
                                      │  UE operation   │
                                      └────────┬────────┘
                                               │
                                      ┌─────────▼────────┐
                                      │ Determine the UE │
                                      │ allowable        │──── 600
                                      │ maximum power,   │
                                      │ Pcmax            │
                                      └─────────┬────────┘
                                               │
                                      ┌─────────▼────────┐
                                      │ Trigger the      │
                                      │ initial          │──── 605
                                      │ transmission     │
                                      │ for a HARQ       │
                                      │ process          │
                                      └─────────┬────────┘
                                               │
                                      ┌─────────▼────────┐
                                      │ Determine the    │
                                      │ required power   │──── 610
                                      │ for the HARQ     │
                                      │ process          │
                                      └─────────┬────────┘
                                               │
                                               │          615
                               NO      ◇───────▼────────◇
                          ┌────────────┤ Total required  │
                          │            │ power exceeds   │
                          │            │ Pcmax with the  │
                          │            │ required power? │
                          │            ◇────────┬────────◇
                          │                     │ YES
                          │            ┌─────────▼────────┐
              620         │            │ Determine power  │
      ◇───────▼────────◇  │            │ reduction        │──── 630
   NO │ The Reduced    │  │            │ priority for     │
 ┌────┤ power is       │  │            │ HARQ processes   │
 │    │ non-zero?      │  │            │ and uplink       │
 │    ◇────────┬───────◇  │            │ channels         │
 │             │ YES      │            └─────────┬────────┘
 │    ┌─────────▼──────┐  │                      │     635
 │    │ Increase the   │  │            ◇─────────▼──────◇  NO
 │    │ transmission   │  │            │ Choose the     ├──────┐
 │    │ power with min │  │ 625        │ HARQ process   │      │
 │    │ {required power├──┘            │ for power      │      │
 │    │ + Reduced      │  │            │ reduction?     │      │
 │    │ power, Pcmax}  │  │            ◇────────┬───────◇      │
 │    └────────────────┘  │                     │ YES          │
 │                        │            ┌─────────▼────────┐    │
 │                        │            │ Reduce the       │    │
 │                        │            │ transmission     │──640│
 │                        │            │ power            │    │
 │                        │            └─────────┬────────┘    │
 │                        │            ┌─────────▼────────┐    │
 │                        │            │ Update the       │    │
 │                        │            │ Reduced power(t) │    │
 │                        │            │ = required power ├─645 │
 │                        │            │ - actual power   │    │
 │                        │            │ + Reduced        │    │
 │                        │            │ power (t-1)      │    │
 │                        │            └─────────┬────────┘    │
 └────────────────────────┴──────────────────────┤            │
                                      ┌─────────▼────────┐    │
                                      │ Transmit data    │    │
                                      │ with the actual  │──650│
                                      │ power            │    │
                                      └─────────┬────────┘    │
                                               │     655      │
                                      ◇─────────▼──────◇  NO   │
                                      │ The transmission├──────┘
                                      │ succeeds?      │
                                      ◇────────┬───────◇
                                               │ YES
                                      ┌─────────▼────────┐
                                      │      End         │
                                      └──────────────────┘
```

[Fig. 7]

**EP 2 679 057 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008215948 A1

- US 2008008152 A1